# EUROPEAN PATENT SPECIFICATION

(11) **EP 2 216 667 B1**
(45) Date of publication and mention of the grant of the patent: **18.01.2012**
(21) Application number: 09001719.5
(22) Date of filing: 06.02.2009
(51) Int. Cl.: G02B 6/44

(54) **Fiber optic distribution device and fiber optic network including the same**
Faseroptische Verteilungsvorrichtung und faseroptisches Netzwerk
Dispositif de distribution à fibre optique et réseau à fibre optique

(43) Date of publication of application: 11.08.2010
(60) Divisional application: 11190947.9
(73) Proprietor: CCS Technology Inc., Wilmington, DE 19803 (US)
(72) Inventor: Sokolowski, Bartlomiej, 97-300 Piotrkow Trybunalski (PL); Ciechomski, Tomasz, 99-400 Lowicz (PL); Fabrykowski, Grzegorz, 95-010 Strykow (PL)
(74) Representative: Sturm, Christoph

(56) References cited:
- EP-A1- 1 944 886
- EP-A2- 0 415 647
- WO-A-97/36197
- WO-A-2008/048935
- JP-A- 59 107 317
- US-A- 5 287 428
- US-A- 5 659 655
- US-B1- 6 385 381
- US-B1- 7 418 184

## Description

The patent application relates to a fiber optic distribution device for indoor applications, especially to a floor box. Further on, the patent application relates to a fiber optic network comprising at least one such fiber optic distribution device.

In the world of the ever-increasing need for broadband bandwidth optical cables have become the main part of telecommunication networks. Optical cables can transmit voice signals, data signals and video signals for very long distances with very high speed. Developments of optic telecommunication networks allow the connection of the end user directly to the optical fiber. This kind of network technology known as FTTH technology (fiber to the home) requires extending an "all optical" communication network closer to the subscribers. As a result such telecommunication networks include large number distribution points from a distribution cable to an end user or subscriber.

One of the key parts of the FTTH network is the last mile connection which often is an indoor installation. Different kind of buildings like multi dwelling units and block of flats require complicated cabling systems which might mean that there are many separated cables, each one to connect one subscriber. Installation of many cables which provide the connection between a main distribution point (which usually is located in the basement or in another place of the building) and the end user may cause many problems with routing through the wall or levels of the building. As a result, such installations consume a lot of time and costs.

Another way to provide the connection between the main distribution point and the end user or subscriber is using an optical cable comprising a riser cable with branched off tether cables, whereby the riser cable is to be connected to the main distribution point via a distribution cable, and whereby the tether cables are to be connected to subscribers via a drop cables. The installation of an optical cable comprising a riser cable and branched off tether cables to provide connection between the main distribution point and the subscribers is done by a highly skilled field technician using standard fiber optic distribution devices which results in high costs of installation. A fiber optic distribution device having the features of the preamble of claim 1 is known from US-A-5 695 655

Against this background, a novel fiber optic distribution device is provided allowing easy installation in order to reduce costs for installation. Further on, a novel fiber optic network including such fiber optic distribution devices is provided.

A novel fiber optic distribution device is defined claim 1.

A novel fiber optic network comprising at least one fiber optic distribution device as claimed in claim 1 is defined in claim 6.

Preferred embodiments of the fiber optic distribution device and fiber optic network are given in the dependent claims and the description below. Exemplary embodiments will be explained in more detail with reference to the drawing, in which:
- figure 1: shows an exploded view of a preferred embodiment of a fiber optic distribution device;
- figure 2: shows a detail of the fiber optic distribution device according figure 1;
- figure 3: shows a detail of figure 2 together with a drop cable;
- figure 4: shows an embodiment of a fiber optic network comprising fiber optic distribution devices according figure 1;
- figure 5: shows another embodiment of a fiber optic network compris- ing fiber optic distribution devices according figure 1.

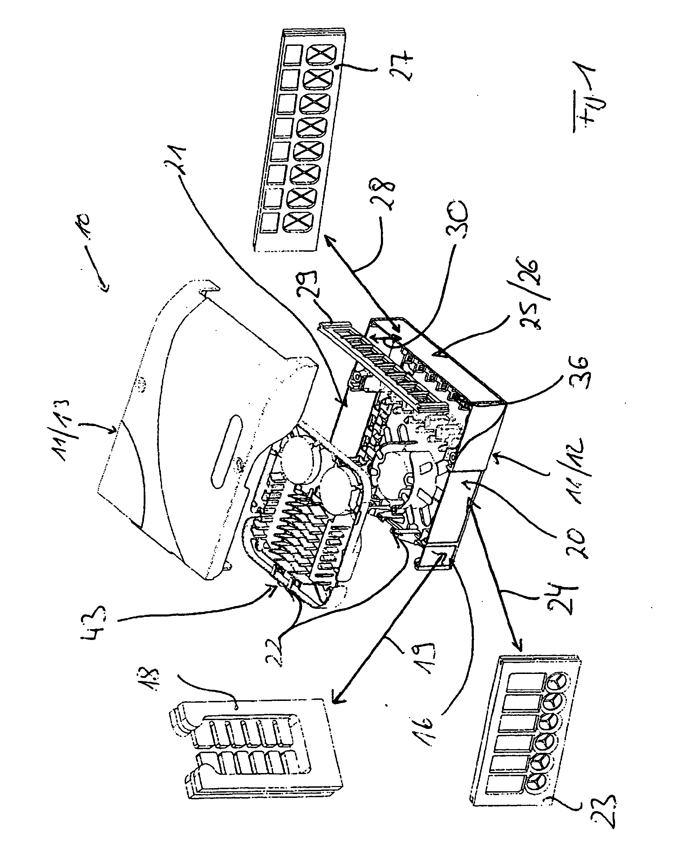

Figures 1 to 3 illustrate a preferred embodiment of a fiber optic distribution device 10 for indoor applications. The fiber optic distribution device 10 comprises a housing 11 having a base part 12 and a cover part 13. The base part 12 and the cover part 13 of the housing 11 define an interior of the housing 11. The base part 12 and the cover part 13 of the housing 11 can be coupled together.

The base part 12 of the housing 11 provides at least one inlet opening for an incoming fiber optic cable entering into the interior of the housing 11 from the exterior of the same and an outlet opening for an outgoing fiber optic cable entering into the exterior of the housing 11 from the interior of the same.

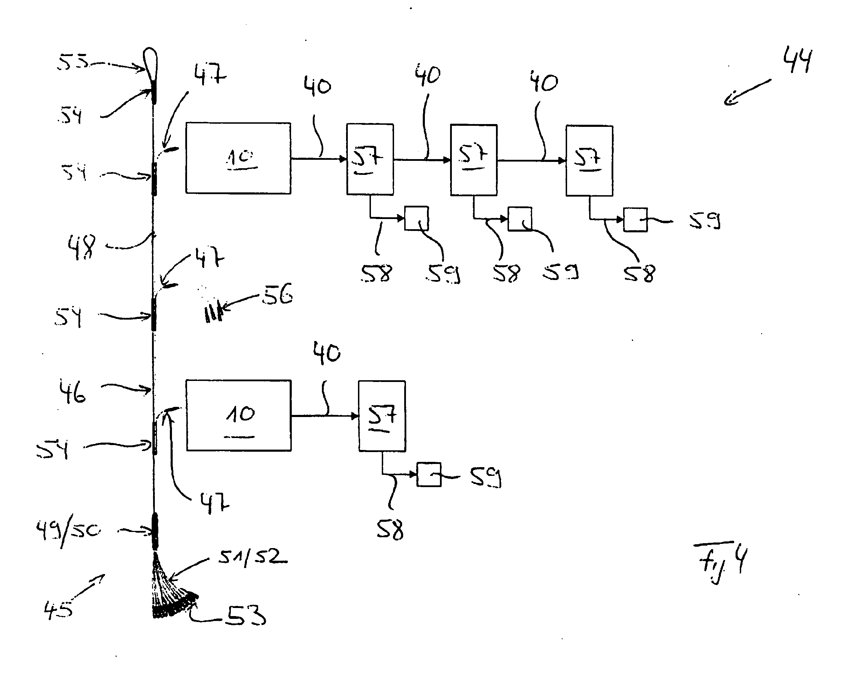

The incoming fiber optic cable and the outgoing fiber optic cable can be a riser cable. Further on, the incoming fiber optic cable and the outgoing fiber optic cable can be a tether cable. The incoming fiber optic cable and the outgoing fiber optic cable are both not shown in figures 1 to 3 but in figures 4 an 5 showing the fiber optic distribution device 10 in connection with embodiments of fiber optic networs. The incoming fiber optic cable and the outgoing fiber optic cable comprise both a number number of optical fibers.

The base part 12 of the housing 11 comprises two opposite side walls 14 and 15, namely a first side wall 14 and a second side wall 15. The inlet opening for the riser cable or tether cable is assigned to the first side wall 14 of the base part 12 of the housing 11 and said outlet opening for the riser cable or tether cable is assigned to a second, opposite side wall 15 of the base part 12 of the housing 11.

Said inlet opening for the riser cable or tether cable and said outlet opening for the riser cable or tether cable are prior to installation closed by removable wall sections 16, 17 of the respective side walls 14, 15. During installation these wall sections 16, 17 can be removed and replaced by grommets 18 (see arrow 19 of figure 1) defining said inlet opening and said outlet opening.

In addition to the inlet opening for a riser cable or tether cable assigned to the first side wall 14 of the base part 12 of the housing 11 there are outlet openings for fiber optic drop cables assigned to said first side wall 14. In addition to the outlet opening for a riser cable or tether cable assigned to the second side wall 15 of the base part 12 of the housing 11 there are outlet openings for fiber optic drop cables assigned to said second side wall 15. These outlet openings for the drop cables are prior to installation closed by removable wall sections 20, 21 of the respective side walls 14 and 15. These wall sections 20, 21 can be removed and replaced by grommets 23 (see arrow 24 of figure 1) during installation defining said outlet openings for the drop cables.

The base part 12 of the housing 11 further comprises a third side wall 25 extending between said first side wall 14 and said opposite second side wall 15. Additional outlet openings for fiber optic drop cables and/or adapters for fiber optic connectors can be assigned to said third side wall 25. Prior installation said third side wall 25 is closed by a removable wall section 26. Said removable wall section 26 can be removed and replaced by a grommet 27 (see arrow 28 of figure 1) defining said additional outlet openings for the drop cables or by an adapter frame 29 (see arrow 30 of figure 1) defining a holding element for fiber optic adapters receiving fiber optic connectors.

The floor box is usually mounted to a wall. In this case the outlet openings for fiber optic drop cables assigned to said first side wall 14 and said second side wall 15 can be used for vertical drop cables and the outlet openings for fiber optic drop cables assigned to said third side wall 25 can be used for horizontal drop cables.

The base part 12 of the housing 11 further comprises a bottom wall 31, whereby at least two spaced apart lines 32 and 33 of bend radius control elements 34 and 35 are assigned to said bottom wall 31. Each line 32, 33 of bend radius control elements 34, 35 runs generally in parallel to said third side wall 25. The bend radius control elements 34, 35 of the lines 32, 33 are arranged in a way that in the middle between each two adjacent bend radius control elements 34 of the first line 32 there is positioned each one bend radius control element 35 of the second line 33 thereby providing each two guide channels, namely a first guide channel for guiding optical fibers of a drop cable or a pigtail from the third side wall 25 to the first side wall 14 and a second guide channel for guiding such optical fibers from the third side wall 25 to the second side wall 15.

Each bend radius control element 34 of the first line 32 comprises two bend radius control side walls converging in the direction to the second line 33 of bend radius control elements 35. Each bend radius control element 35 of the second line 33 comprises two bend radius control side walls converging in the direction to the first line 32 of bend radius control elements 34.

Strain relief elements are assigned to the bottom wall 31 of the base part 12 of the housing 11, namely first strain relief elements 36 adjacent to the third side wall 25 and second strain relief elements 37 adjacent to the first side wall 14 and to the said second side wall 15. The fist strain relief elements 36 provide strain relief for the drop cables or pigtails running to said third side wall 25.

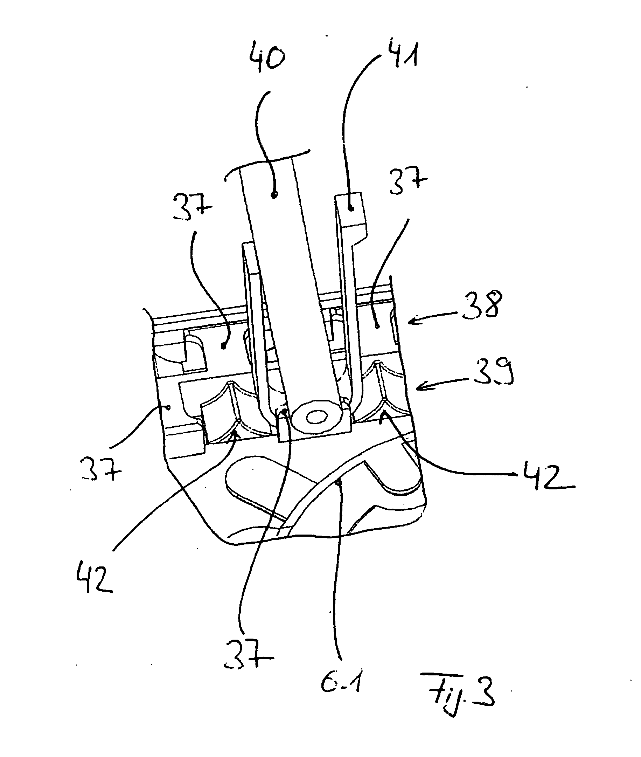

At least one line 38, 39 of second strain relief elements 37 assigned to said bottom wall 31 runs generally in parallel to each of said first side wall 14 and said second side wall 15 in order to provide strain relief for the drop cables running through the respective outlet openings of the respective side wall 14, 15. Each drop cable 40 (see figure 3) running through the respective side wall 14, 15 can be placed on such a second strain relief element 37 and can be fixed at said second strain relief element 37 using a cable tie 41 surrounding the respective drop cable 40 and the respective second strain relief element 37. As can be best seen in figure 3, at each side of each second strain relief element 37 there is positioned a cable tie guide element 42 guiding the cable tie 41 when mounting the respective cable tie 41 at the respective relief element 37.

According to figure 3, two spaced apart lines 38, 39 of second strain relief elements 37 are running generally in parallel to each of said first side wall 14 and said second side wall 15. In the middle between each two adjacent second strain relief elements 37 of the each line 38, 39 there is positioned each one second strain relief element 37 of the respective spaced apart line 39, 38 of second strain relief elements 27. In the middle between each two adjacent cable tie guide elements 42 of the each line 38, 39 there is positioned a cable tie guide element 42 of the respective spaced apart line 39, 38.

According to figure 1, the fiber optic distribution device 10 comprises a splice tray 43 being positioned inside the housing 11. The splice tray 43 is swingable attached to the housing 11, namely to the base part 12. A hinge 22 is formed between the splice tray 43 and the base part 12 of the housing 11 running generally in parallel to the third side wall 25 of the base part 12.

Depending on the concrete design of the fiber optic network in which the fiber optic distribution device 10 is used, the splice tray 43 can carry at least one splice between an optical fiber of a riser cable and an optical fiber of a pigtail, or at least one splice between an optical fiber of a tether cable and an optical fiber of a pigtail, or at least one splice between an optical fiber of a riser cable and an optical fiber of a drop cable, or at least one splice between an optical fiber of a tether cable and an optical fiber of a drop cable.

It should be noted that the optical fibers of a tether cable could be preconnectorized with fiber optic connectors. In this is case, the optical fibers of the tether cable can be connected to an optical fiber of a drop cable using an adapter being hold by the adapter frame 29 and thereby bypassing the splice tray 43.

Figure 4 shows a schematic view of a preferred embodiment of a fiber optic network 44 including such fiber optic distribution devices 10. Figure 4 shows as part of the fiber optic network 44 a cable assembly 45 which comprises a riser cable 46 and tether cables 47 branched off from said riser cable 46.

The riser cable 46 of the fiber optic network 44 comprises a cable jacket 48 surrounding a plurality of optical fiber bundles (not shown), wherein each of said optical fiber bundles comprises preferably a buffer tube surrounding a plurality of individual optical fibers. The riser cable 46 further comprises a furcation adapter 49 mounted to a first end 50 of said riser cable 46, said furcation adapter 49 splitting out individual optical fibers 51 of said riser cable 46 in a way that each of said individual optical fibers 51 of said riser cable 46 is surrounded by an individual protection tube 52 and that each of said individual optical fibers 51 of said riser cable 26 can be connected to an optical fiber of a distribution cable (not shown). The individual optical fibers 51 of said riser cable 46 are preferably connectorized with fiber optic connectors 53 in order to connect each of said individual optical fibers 51 of said riser cable 46 to an optical fiber of said distribution cable.

The riser cable 46 of the fiber optic network 35 further comprises mid span access locations 54, wherein in the region of at least one of these mid span access locations 54 at least one tether cable 47 is branched off from said riser cable 46. According to the embodiment of figure 4, the cable assembly 45 comprises three mid span access locations 54, whereby at each mid span access location 54 one tether cable 47 is branched off from said riser cable 46. Each of said tether cables 47 of the cable assembly 36 comprises unspliced optical fibers of said riser cable 46.

The riser cable 46 of the fiber optic network 44 further comprises a pulling member 55 for pulling the riser cable 46 together with the tether cables 47 through a cable duct during installation. The pulling member 55 is assigned to a second end 56 of said riser cable 46. The pulling member 55 is preferably an integral element of the riser cable 46.

The fiber optic network 44 further comprises at least one first fiber optic distribution device 10. The or each first fiber optic distribution device 10 corresponds to the fiber optic distribution device 10 shown in figures 1 to 3.

In the embodiment of a fiber optic network 44 of figure 4 a tether cable 47 enters into each first fiber optic distribution device 10. In this case, each first fiber optic distribution device 10 carries connection points to connect optical fibers of a tether cable 47 to optical fibers of a drop cable 40. In case that the optical fibers of a tether cable 47 are preconnectorized with fiber optic connectors 56 (see figure 3), the fiber optic connectors 56 of preconnectorized optical fibers of a tether cable 47 can be connected directly with fiber optic connectors of the drop cable 40 using adapters being hold in the adapter frame 29.

Its is also possible to splice the optical fibers of a tether cable 47 to optical fibers of pigtails using the splice tray 43 for storage of the splices and to connect the optical fibers of the pigtails with optical fibers of the drop cable 40 by fiber optic connectors received by adapters being hold in the adapter frame 29. This results in an indirect conncetion via the pigtail.

Further on, it is possible to splice the optical fibers of a tether cable 47 directly to optical fibers of the drop cable 40 using the splice tray 43 for storage of the splices.

The drop cable 40 emerging from the first fiber optic distribution device 10 enter in a second distribution fiber optic distribution device 57, namely into the second distribution fiber optic distribution device 57 following next to the first fiber optic distribution device 10. Said second fiber optic distribution devices 57 are carrying connection points in order to connect optical fibers of a drop cable 40 to optical fibers of at least one optical network terminal cable 58 each running to a subscriber 59.

The optical fibers of each drop cable 40 are guided to at least one second fiber optic distribution device 57, the or each second fiber optic distribution device 57 carrying splices in order to connect the optical fibers of said drop cable 40 to optical fibers of at least one optical network terminal cable 58 running to a subscriber 59. According to figure 4 the optical fibers of the drop cable 40 being connected to the optical fibers of the upper tether cable 47 are guided to a cascade of second fiber optic distribution devices 57, whereby within each second fiber optic distribution devices 57 at least one optical fiber of the drop cable 40 is connected via an optical fiber of a pigtail to an optical fiber of an optical network terminal cable 58. The other optical fibers of the drop cable 40 are uncut and exit the respective second fiber optic distribution devices 57.

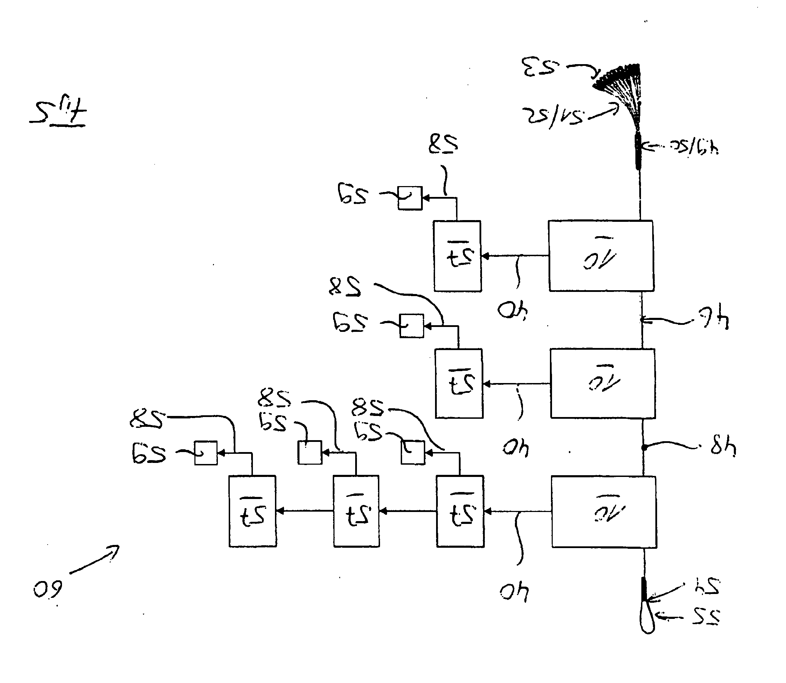

Figure 5 shows a schematic view of another preferred embodiment of a fiber optic network 60 including the fiber optic distribution devices 10. Figure 5 shows as part of the fiber optic network 44 a riser cable 46 entering directly into the fiber optic distribution devices 10. In this case, each first fiber optic distribution device 10 carries connection points to connect optical fibers of a riser cable 46 to optical fibers of a drop cable 40.

In case that the optical fibers of a riser cable 46 are connectorized with fiber optic connectors, the fiber optic connectors of the connectorized optical fibers of a riser cable 46 can be directly connected with fiber optic connectors of the drop cable 40 using adapters being hold in the adapter frame 29.

Its is also possible to splice the optical fibers of a riser cable 46 to optical fibers of pigtails using the splice tray 43 for storage of the splices and to connect the optical fibers of the pigtails with optical fibers of the drop cable 40 by fiber optic connectors received by adapters being hold in the adapter frame 29. This results in an indirect conncetion of the optical fibers of a riser cable 46 to optical fibers of the drop cable 40.

Further on, it is possible to connect the optical fibers of a riser cable 46 directly to optical fibers of the drop cable 40.

According to figure 5 a cascade of fiber optic distribution devices 10 is assigned to the riser cable 46, whereby within each cascaded fiber optic distribution devices 10 at least one optical fiber of the riser cable 46 is connected to an optical fiber of the drop cable 40. The other optical fibers of the riser cable 46 are uncut and exit the respective fiber optic distribution devices 10.

As described in connection with figure 4, the optical fibers of each drop cable 40 of the fiber optic network according to figure 5 are guided to at least one second fiber optic distribution device 57, the or each second fiber optic distribution device 57 carrying splices in order to connect the optical fibers of said drop cable 40 to optical fibers of at least one optical network terminal cable 58 running to a subscriber 59.

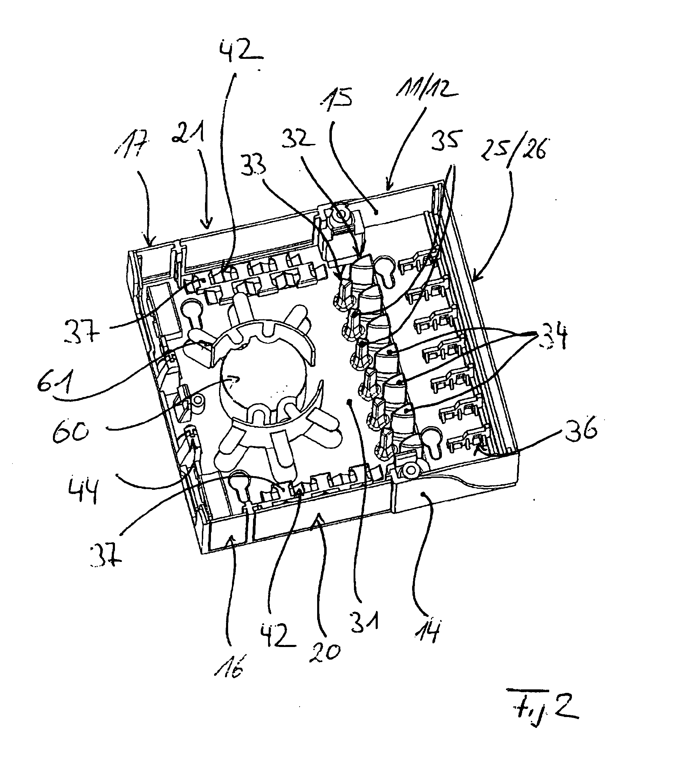

As can be best seen in figure 2, two drum-like or cylinder-like optical fiber overlength guiding and storage elements 60 and 61 are assigned to the bottom wall 31 of the base part 12 of the housing 11 of the fiber optic distribution device 10. The two drum-like or cylinder-like optical fiber overlength guiding and storage elements 60 and 61 are inserted into one another in a way the first fiber overlength guiding and storage element 60 defining a smaller diameter for guiding optical fibers is partly encircled by the second fiber overlength guiding and storage element 61 defining a larger diameter for guiding optical fibers, whereby a first otherlength storage room is provided between the two fiber overlength guiding and storage elements 60 and 61, and whereby a second otherlength storage room is provided radially outside from the second fiber overlength guiding and storage element 61.

The first otherlength storage room provided between the two fiber overlength guiding and storage elements 60 and 61 can preferably be used in the installation of figure 5 for the storage of fiber overlength of the riser cable 46 or in the in the installation of figure 4 for the storage of fiber overlength of the tether cable 47. The second overlength storage room provided radially outside from the second fiber overlength guiding and storage element 61 can preferably be used in both installations for the storage of fiber overlength of drop cables or pig tails

### List of reference numerals

- 10: fiber optic distribution device
- 11: housing
- 12: base part
- 13: cover part
- 14: first side wall
- 15: second side wall
- 16: wall section
- 17: wall section
- 18: grommet
- 19: arrow
- 20: wall section
- 21: wall section
- 22: hinge
- 23: grommet
- 24: arrow
- 25: third side wall
- 26: wall section
- 27: grommet
- 28: arrow
- 29: adapter frame
- 30: arrow
- 31: bottom wall
- 32: line
- 33: line
- 34: bend radius control element
- 35: bend radius control element
- 36: strain relief element
- 37: strain relief element
- 38: line
- 39: line
- 40: drop cable
- 41: cable tie
- 42: cable tie guide element
- 43: splice tray
- 44: fiber optic network
- 45: cable assembly
- 46: riser cable
- 47: tether cable
- 48: cable jacket
- 49: furcation adapter
- 50: first end
- 51: individual optical fiber
- 52: individual protection tube
- 53: fiber optic connector
- 54: mid span access location
- 55: pulling member
- 56: second end
- 57: fiber optic distribution device
- 58: network terminal cable
- 59: subscriber
- 60: overlength guiding and storage element
- 61: overlength guiding and storage element

## Claims

1. A fiber optic distribution device (10), comprising a housing (11),
said housing (11) providing an inlet opening for an fiber optic riser cable (46) or for an fiber optic tether cable (47) and an outlet opening for said fiber optic riser cable (46) or for said fiber optic tether cable (47), whereby said inlet opening is assigned to a first side wall (14) of the housing and said outlet opening is assigned to a second, opposite second side wall (15) of the housing;
said housing (11) having a third side wall (25) extending between said first side wall (14) and said opposite second side wall (15), whereby outlet openings for fiber optic drop cables (40) and/or adapters for fiber optic connectors being assigned to said third side wall (25);
said housing (11) further having a bottom wall (31), whereby at least two spaced apart lines (32, 33) of bend radius control elements (34, 35) are assigned to said bottom wall (31);
**characterized in that**
each line (32, 33) of bend radius control elements (34, 35) runs generally in parallel to said third side wall (25);
in the middle between each two adjacent bend radius control elements (34) of the first line (32) there is positioned each one bend radius control element (35) of the second line (33) thereby providing each two guide channels, namely a first guide channel for guiding optical fibers from the third side wall (25) to the first side wall (14) and a second guide channel for guiding optical fibers from the third side wall (25) to the second side wall (15);
each bend radius control element (34) of the first line (32) comprises two bend radius control side walls converging in the direction to the second line (33) of bend radius control elements, and that each bend radius control element (35) of the second line (33) comprises two bend radius control side walls converging in the direction to the first line (32) of bend radius control elements.

2. The fiber optic distribution device as claimed in claim 1, **characterised in that** additional outlet openings for fiber optic drop cables (40) are assigned to said first side wall (14).

3. The fiber optic distribution device as claimed in claim 1 or 2, **characterised in that** additional outlet openings for fiber optic drop cables (40) are assigned to said second side wall (15).

4. The fiber optic distribution device as claimed in one of claims 1 to 3, **characterised in that**
outlet openings for fiber optic drop cables (40) are assigned to said first side wall (14) and to said second side wall (15);
at least one line (38, 39) of strain relief elements (37) assigned to said bottom wall (31) runs generally in parallel to each of said first side wall (14) and said second side wall (15) in order to provide strain relief for the drop cables running through the respective outlet openings of the respective side wall (14, 15) in a way that each drop cable can be placed on a strain relief element (37) and can be fixed at said strain relief element (37) using a cable tie (41) surrounding the respective drop cable (40) and the respective strain relief element (37);
whereby at each side of each strain relief element (37) there is positioned a cable tie guide element (42) guiding the cable tie (41) when mounting the respective cable tie (41) at the respective relief element (37).

5. The fiber optic distribution device as claimed in claim 4, **characterised in that** two spaced apart lines (38, 39) of strain relief elements (37) are running generally in parallel to each of said first side wall (14) and said second side wall (15), whereby in the middle between each two adjacent strain relief elements (37) of each line (38, 39) there is positioned each one strain relief element (37) of the respective spaced apart line (39, 38) of strain relief elements, and whereby in the middle between each two adjacent cable tie guide elements (42) of the each line (38, 39) there is positioned a cable tie guide element (42) of the respective spaced apart line (39, 38).

6. A fiber optic network comprising
a riser cable (46); said riser cable (46) comprising
a cable jacket (48) surrounding a plurality of optical fiber bundles;
a furcation adapter (49) mounted to an end (50) of said riser cable (46), said furcation adapter (49) splitting out the optical fibers of said riser cable (46) in a way that each of said optical fibers of said riser cable (46) is surrounded by an individual protection tube and that each of said optical fibers of said riser cable (46) can be connected to an optical fiber of a distribution cable;
at least one first fiber optic distribution device (10) as claimed in one of claims 1 to 5, said first fiber optic distribution device (10) carrying connection points in order to connect optical fibers of the riser cable (46) to optical fibers of a drop cable (40); and
at least one second fiber optic distribution device (57) carrying connection points in order to connect optical fibers of a drop cable (40) to optical fibers of a optical network terminal cable (58) running to a subscriber (59).

## Patentansprüche

1. Faseroptische Verteilungsvorrichtung (10), die ein Gehäuse (11) umfasst,
wobei das Gehäuse (11) eine Einlassöffnung für ein faseroptisches Steigkabel (46) oder für ein faseroptisches Anbindungskabel (47) und eine Auslassöffnung für das faseroptische Steigkabel (46) oder für das faseroptische Anbindungskabel (47) bereitstellt, wobei die Einlassöffnung einer ersten Seitenwand (14) des Gehäuses zugeordnet ist und die Auslassöffnung einer zweiten, gegenüberliegenden zweiten Seitenwand (15) des Gehäuses zugeordnet ist;
wobei das Gehäuse (11) eine dritte Seitenwand (25) aufweist, die sich zwischen der ersten Seitenwand (14) und der gegenüberliegenden zweiten Seitenwand (15) erstreckt, wobei Auslassöffnungen für faseroptische Verbindungskabel (40) und/oder Adapter für faseroptische Verbinder der dritten Seitenwand (25) zugeordnet sind;
wobei das Gehäuse (11) weiterhin eine Bodenwand (31) aufweist, wobei mindestens zwei voneinander beabstandete Linien (32, 33) von Biegeradiusbegrenzungselementen (34, 35) der Bodenwand (31) zugeordnet sind;
**dadurch gekennzeichnet, dass**
jede Linie (32, 33) von Biegeradiusbegrenzungselementen (34, 35) allgemein parallel zu der dritten Seitenwand (25) verläuft;
in der Mitte zwischen jeweils zwei benachbarten Biegeradiusbegrenzungselementen (34) der ersten Linie (32) jeweils ein Biegeradiusbegrenzungselement (35) der zweiten Linie (33) positioniert ist, wodurch jeweils zwei Führungskanäle bereitgestellt werden, nämlich ein erster Führungskanal zum Führen von Lichtwellenleitern von der dritten Seitenwand (25) zu der ersten Seitenwand (14) und ein zweiter Führungskanal zum Führen von Lichtwellenleitern von der dritten Seitenwand (25) zu der zweiten Seitenwand (15);
jedes Biegeradiusbegrenzungselement (34) der ersten Linie (32) zwei Biegeradiusbegrenzungsseitenwände umfasst, die in Richtung der zweiten Linie (33) von Biegeradiusbegrenzungselementen konvergieren, und dass jedes Biegeradiusbegrenzungselement (35) der zweiten Linie (33) zwei Biegeradiusbegrenzungsseitenwände umfasst, die in Richtung der ersten Linie (32) von Biegeradiusbegrenzungselementen konvergieren.

2. Faseroptische Verteilungsvorrichtung nach Anspruch 1, **dadurch gekennzeichnet, dass** zusätzliche Auslassöffnungen für faseroptische Verbindungskabel (40) der ersten Seitenwand (14) zugeordnet sind.

3. Faseroptische Verteilungsvorrichtung nach Anspruch 1 oder 2, **dadurch gekennzeichnet, dass** zusätzliche Auslassöffnungen für faseroptische Verbindungskabel (40) der zweiten Seitenwand (15) zugeordnet sind.

4. Faseroptische Verteilungsvorrichtung nach einem der Ansprüche 1 bis 3, **dadurch gekennzeichnet, dass** Auslassöffnungen für faseroptische Verbindungskabel (40) der ersten Seitenwand (14) und der zweiten Seitenwand (15) zugeordnet sind;
mindestens eine Linie (38, 39) von Zugentlastungselementen (37), die der Bodenwand (31) zugeordnet ist, allgemein parallel zu der ersten Seitenwand (14) und der zweiten Seitenwand (15) verläuft, um eine Zugentlastung für die Verbindungskabel bereitzustellen, die sich durch die jeweiligen Auslassöffnungen der jeweiligen Seitenwand (14, 15) erstrecken, so dass jedes Verbindungskabel auf einem Zugentlastungselement (37) platziert werden kann und mit einem Kabelbinder (41), der das jeweilige Verbindungskabel (40) und das jeweilige Zugentlastungselement (37) umgibt, an dem Zugentlastungselement (37) befestigt werden kann; wodurch auf jeder Seite jedes Zugentlastungselements (37) ein Kabelbinderführungselement (42) positioniert ist, das den Kabelbinder (41) bei der Montage des jeweiligen Kabelbinders (41) an dem jeweiligen Entlastungselement (37) führt.

5. Faseroptische Verteilungsvorrichtung nach Anspruch 4, **dadurch gekennzeichnet, dass** zwei voneinander beabstandete Linien (38, 39) von Zugentlastungselementen (37) allgemein parallel zu der ersten Seitenwand (14) und der zweiten Seitenwand (15) verlaufen, wobei in der Mitte zwischen jeweils zwei benachbarten Zugentlastungselementen (37) jeder Linie (38, 39) jeweils ein Zugentlastungselement (37) der jeweils beabstandeten Linie (39, 38) von Zugentlastungselementen positioniert ist und wobei in der Mitte zwischen jeweils zwei benachbarten Kabelbinderführungselementen (42) jeder Linie (38, 39) ein Kabelbinderführungselement (42) der jeweils beabstandeten Linie (39, 38) positioniert ist.

6. Faseroptisches Netzwerk, das Folgendes umfasst:
ein Steigkabel (46); wobei das Steigkabel (46) Folgendes umfasst:
einen Kabelmantel (48), der mehrere Lichtwellenleiterbündel umgibt;
einen Aufteiladapter (49), der an einem Ende (50) des Steigkabels (46) angebracht ist, wobei der Aufteiladapter (49) die Lichtwellenleiter des Steigkabels (46) so aufteilt, dass jeder der Lichtwellenleiter des Steigkabels (46) von einer einzelnen Schutzröhre umgeben ist und dass jeder der Lichtwellenleiter des Steigkabels (46) mit einem Lichtwellenleiter eines Verteilungskabels verbunden werden kann;
mindestens eine erste faseroptische Verteilungsvorrichtung (10) nach einem der Ansprüche 1 bis 5, wobei die erste faseroptische Verteilungsvorrichtung (10) Verbindungspunkte trägt, um Lichtwellenleiter des Steigkabels (46) mit Lichtwellenleitern eines Verbindungskabels (40) zu verbinden; und
mindestens eine zweite faseroptische Verteilungsvorrichtung (57), die Verbindungspunkte trägt, um Lichtwellenleiter eines Verbindungskabels (40) mit Lichtwellenleitern eines zu einem Teilnehmer (59) verlaufenden Kabels (58) eines Endgeräts eines optischen Netzwerks zu verbinden.

## Revendications

1. Dispositif de distribution à fibre optique (10), comprenant un boîtier (11),
ledit boîtier (11) fournissant une ouverture d'entrée pour un câble ascendant à fibre optique (46) ou pour un câble de liaison à fibre optique (47) et une ouverture de sortie pour ledit câble ascendant à fibre optique (46) ou pour ledit câble de liaison à fibre optique (47), ladite ouverture d'entrée étant affectée à une première paroi latérale (14) du boîtier et ladite ouverture de sortie étant affectée à une deuxième paroi latérale opposée (15) du boîtier ;
ledit boîtier (11) ayant une troisième paroi latérale (25) s'étendant entre ladite première paroi latérale (14) et ladite deuxième paroi latérale opposée (15), des ouvertures de sortie pour des câbles de dérivation à fibre optique (40) et/ou des adaptateurs pour connecteurs de fibre optique étant affectées à ladite troisième paroi latérale (25) ;
ledit boîtier (11) ayant en outre une paroi inférieure (31), au moins deux lignes espacées (32, 33) d'éléments de commande de rayon courbe (34, 35) étant affectées à ladite paroi inférieure (31) ;
**caractérisé en ce que**
chaque ligne (32, 33) d'éléments de commande de rayon courbe (34, 35) s'étend généralement en parallèle avec ladite troisième paroi latérale (25) ;
au milieu entre deux éléments de commande de rayon courbe (34) adjacents respectifs de la première ligne (32) est disposé à chaque fois un élément de commande de rayon courbe (35) respectif de la deuxième ligne (33), pour ainsi fournir deux canaux de guidage, à savoir un premier canal de guidage pour guider des fibres optiques depuis la troisième paroi latérale (25) jusqu'à la première paroi latérale (14) et un deuxième canal de guidage pour guider les fibres optiques depuis la troisième paroi latérale (25) jusqu'à la deuxième paroi latérale (15) ;
chaque élément de commande de rayon courbe (34) de la première ligne (32) comprend deux parois latérales de commande de rayon courbe convergeant dans la direction de la deuxième ligne (33) d'éléments de commande de rayon courbe, et **en ce que** chaque élément de commande de rayon courbe (35) de la deuxième ligne (33) comprend deux parois latérales de commande de rayon courbe convergeant dans la direction de la première ligne (32) d'éléments de commande de rayon courbe.

2. Dispositif de distribution à fibre optique selon la revendication 1, **caractérisé en ce que** des ouvertures de sortie supplémentaires pour des câbles de dérivation à fibre optique (40) sont affectées à ladite première paroi latérale (14).

3. Dispositif de distribution à fibre optique selon la revendication 1 ou 2, **caractérisé en ce que** des ouvertures de sortie supplémentaires pour des câbles de dérivation à fibre optique (40) sont affectées à ladite deuxième paroi latérale (15).

4. Dispositif de distribution à fibre optique selon l'une quelconque des revendications 1 à 3, **caractérisé en ce que**
des ouvertures de sortie pour des câbles de dérivation à fibre optique (40) sont affectées à ladite première paroi latérale (14) et à ladite deuxième paroi latérale (15) ;
au moins une ligne (38, 39) d'éléments de décharge de traction (37) affectée à ladite paroi inférieure (31) s'étend généralement parallèlement à chacune de ladite première paroi latérale (14) et de ladite deuxième paroi latérale (15) afin de fournir une décharge de traction pour les câbles de dérivation s'étendant à travers les ouvertures de sortie respectives de la paroi latérale respective (14, 15) de telle manière que chaque câble de dérivation puisse être placé sur un élément de décharge de traction (37) et puisse être fixé au niveau dudit élément de décharge de traction (37) en utilisant une attache de câble (41) entourant le câble de dérivation respectif (40) et l'élément de décharge de traction respectif (37) ;
un élément de guidage d'attache de câble (42) guidant l'attache de câble (41) lors du montage de l'attache de câble respective (41) au niveau de l'élément de décharge de traction respectif (37) étant positionné de chaque côté de chaque élément de décharge de traction (37).

5. Dispositif de distribution à fibre optique selon la revendication 4, **caractérisé en ce que** deux lignes espacées (38, 39) d'éléments de décharge de traction (37) s'étendent généralement en parallèle avec chacune de ladite première paroi latérale (14) et de ladite deuxième paroi latérale (15), à chaque fois un élément de décharge de traction (37) de la ligne respective espacée (38, 39) d'éléments de décharge de traction étant positionné au milieu entre deux éléments de décharge de traction respectifs adjacents (37) de chaque ligne (38, 39), et un élément de guidage d'attache de câble (42) de la ligne espacée respective (39, 38) étant à chaque fois positionné au milieu entre deux éléments de guidage d'attache de câble adjacents respectifs (42) de chaque ligne (38, 39).

6. Réseau de fibre optique, comprenant :
un câble ascendant (46) ; ledit câble ascendant (46) comprenant :
une gaine pour câble (48) entourant une pluralité de faisceaux de fibres optiques ;
un adaptateur de furcation (49) monté sur une extrémité (50) dudit câble ascendant (46), ledit adaptateur de furcation (49) séparant les fibres optiques dudit câble ascendant (46) de telle manière que chacune desdites fibres optiques dudit câble ascendant (46) soit entourée par un tube de protection individuelle et que chacune desdites fibres optiques dudit câble ascendant (46) puisse être connectée à une fibre optique d'un câble de distribution ;
au moins un premier dispositif de distribution à fibre optique (10) selon l'une quelconque des revendications 1 à 5, ledit premier dispositif de distribution à fibre optique (10) portant des points de connexion afin de connecter des fibres optiques du câble ascendant (46) à des fibres optique d'un câble de dérivation (40) ; et
au moins un deuxième dispositif de distribution à fibre optique (57) portant des points de connexion afin de connecter des fibres optiques d'un câble de dérivation (40) à des fibres optiques d'un câble de borne de réseau optique (58) s'étendant jusqu'à un abonné (59).
